# EUROPÄISCHE PATENTSCHRIFT

(11) **EP 1 430 940 B1**
(45) Veröffentlichungstag und Bekanntmachung des Hinweises auf die Patenterteilung: **23.08.2006**
(21) Anmeldenummer: 02102793.3
(22) Anmeldetag: 18.12.2002
(51) Int. Cl.: B01D 29/90, B01D 37/02

(54) **Filter für die Anschwemmfiltration und Einlaufverteiler**
Precoat filter and inlet distributor
Filtre à précouche et distributeur d'entrée

(43) Veröffentlichungstag der Anmeldung: 23.06.2004
(73) Patentinhaber: Filtrox AG, 9000 St. Gallen (CH)
(72) Erfinder: Gans, Ulrich Dr., 9214 Kradolf-Schönenberg (CH); Loser, Werner, 9242 Oberuzwil (CH)
(74) Vertreter: Müller, Christoph Emanuel

(56) Entgegenhaltungen:
- EP-A- 1 000 647
- WO-A-03/024563
- CH-A- 688 265
- DE-A- 10 005 828
- DE-B- 1 097 409
- DE-U- 9 411 930
- US-A- 3 715 033
- US-A- 5 858 217
- PATENT ABSTRACTS OF JAPAN vol. 2000, no. 13, 5. Februar 2001 (2001-02-05) & JP 2000 271412 A (JAPAN ORGANO CO LTD), 3. Oktober 2000 (2000-10-03)

## Beschreibung

Die Erfindung betrifft einen Filter für die Anschwemmfiltration sowie einen Einlaufverteiler für einen solchen Filter. Derartige Anschwemmfilter werden vor allem zur Filtration und Stabilisierung von Getränken und flüssigen Lebensmitteln, insbesondere Bier, eingesetzt.

Ein solcher Filter beinhaltet einen Filterkessel, in welchem sich die Filterelemente befinden. In der Regel handelt es sich hierbei um kerzenförmige Filterelemente, sogenannte Filterkerzen, welche die für die Filtration wirksame Trennfläche von Filtratraum und Unfiltratraum bilden. Zumeist sind derartige Filterelemente an einer Lochplatte befestigt; alternative Konstruktionen sind jedoch möglich. Die eigentliche Filtration bzw. Stabilisierung wird bewirkt durch eine Anschwemmschicht von Filterhilfsmitteln oder Stabilisierungsmitteln, beispielsweise Kieselgur oder Polyvinylpolypyrolidon (PVPP), auf den Filterelementen. Dem gleichmässigen Aufbau und der gleichmässigen Stärke der Anschwemmschicht auf der ganzen Fläche der Filterelemente kommt für die Wirksamkeit des Filters entscheidende Bedeutung zu. Die verwendeten Filterhilfsmittel und Stabilisierungsmittel bestehen zumeist aus Partikeln unterschiedlicher Grösse und Gewicht. Um eine einheitlich homogene Anschwemmung auch mit verschiedenartigen Partikeln zu gewährleisten, muss die Einströmung der Filterhilfsmittel durch einen Einlaufverteiler mit einer gewissen Mindest-Turbulenz erfolgen, welche ein Sedimentieren der grösseren und/oder schwereren Partikel verhindert. Eine zu grosse Turbulenz hingegen wirkt dem Aufbau einer stabilen und vollständigen Anschwemmschicht entgegen, da beispielsweise partielle Abschwemmungen oder ungleichmässige Anschwemmungen auftreten können. Zumeist werden zum Eintrag der Filterhilfsmittel in den Filterkessel Einlaufverteiler verwendet, welche durch eine vorteilhafte Beeinflussung der Einströmungsparameter einen gleichmässigen Aufbau der Anschwemmschicht gewährleisten sollen. Nach erfolgter Anschwemmung der Filterelemente wird ebenfalls durch die Einlaufverteiler das zu filtrierende Gut eingetragen, wobei auch hierbei eine im Sinne der gleichmässigen Beaufschlagung der Filterelemente vorteilhafte Strömungsbeeinflussung erwünscht ist. Zur Reinigung des Filters wird ein Reinigungsmedium in den Filter eingebracht, wobei die Zufuhr des Reinigungsmediums unter anderem auch über den Einlaufverteiler erfolgen kann.

Das DE-GM 94 17 638.8 offenbart einen Kerzenfilter mit einem Einlaufverteiler, dessen oberer Abschluss als Düsenkopf ausgebildet ist. Hierbei sind Umlenkvorrichtungen vorgesehen, an welchen das einfliessende Medium seine Strömungsrichtung mehrmals ändert. In der Praxis hat sich gezeigt, dass derartige Düsenköpfe zu ausgeprägten und nur schwer oder gar nicht kontrollierbaren Strömungsverhältnissen führen. Dies kann insbesondere in der Anschwemmphase eine ungleichmässige Verteilung der Filterhilfsmittel auf die Filterelemente bewirken.

Das Dokument CH 688 265 beschreibt ebenfalls einen Anschwemmfilter. Hierbei kommt ein Einlaufverteiler zum Einsatz, welcher von dem einlaufenden Medium nur teilweise durchströmt wird: Ein Teilstrom wird seitlich an dem Einlaufverteiler vorbei in den Filterkessel eingebracht. Der Teilstrom, welcher in den Einlaufverteiler eintritt, wird über Durchlassöffnungen dem Filterkessel zugeführt. Diese Ausbildung eines Einlaufverteilers ermöglicht eine Steuerung der Einflussströmung über die Menge und/oder den Druck des zugeführten Mediums: Je höher der Einflussdruck, um so grösser ist der Anteil des Mediums, welches in einem Teilstrom an dem Einlaufverteiler vorbei in den Filterkessel einfliesst. Für eine optimale Voranschwemmung geeignete Parameter müssen experimentell bestimmt werden. Problematisch ist jedoch, dass die aus den Durchlassöffnungen des Einlaufverteilers austretenden Strömungen in ihrem Verhalten nicht oder über die Fliessgeschwindigkeit nur äusserst begrenzt beeinflussbar sind: Unerwünschte Verwirbelungen des Mediums beim Austritt aus den Durchlassöffnungen sind indes die Regel.

DE 94 11 930 zeigt einen Einlaufverteiler mit Bohrungen, die über den Umfang der Mantelfläche eines sich von unten nach oben verjüngenden Einsatzkörpers in einer Ebene verteilt sind. Der Einsatzkörper verhindert eine konzentrierte Ansammlung von Filterhilfsmittel beim Trubaustrag.

In US 3,715,033 ist eine Einströmzone mit radialen Verteilerplatten offenbart.

EP 1 000 647 zeigt einen Einlaufverteiler, der als Hohlkörper mit übereinander angeordneten Lochreihen ausgebildet ist. Der Strömungsverlauf wird über eine Ventilanordnung geregelt.

US 5,858,217 zeigt einen Einlaufverteiler, der als Hohlkörper mit übereinander angeordneten Lochreihen ausgebildet ist.

WO03/024563 offenbart einen Anschwemmfilter mit einem Einlaufverteiler, der einen umlaufenden, sich in Richtung der seitlichen Filterkesselwand stetig erweiternden Ringspalt aufweist. Dieser soll eine Diffusorwirkung auf die Strömung haben.

Aus DE 100 05 829 ist eine Vorrichtung zur Strömungsverteilung bekannt, die einen dickwandiger Hohlkörper aufweist. Dieser besitzt Durchtrittsöffnungen, welche in einer Ebene senkrecht zur Längsachse des Einlaufverteilers liegen. Der Hohlkörper dient dazu, den eigentlichen, unterhalb des Hohlkörpers gelegenen Strömungsverteiler vor herunterfallenden Teilchen zu schützen.

Die Vorrichtung weist zudem ringartige Führungselemente auf, deren Aussendruchmesser sich nach oben hin verjüngen, um Teilströme abzuschälen und tiefer abgesonderte Teilchenströme weiter nach aussen zu befördern. Die Wurfweite und somit die genaue Anordnung der Führungselement muss für jeweilige Behälterfilter speziell eingestellt werden.

Es ist daher eine Aufgabe der Erfindung, die Nachteile des Bekannten zu vermeiden, insbesondere also das Eintrags- und Strömungsverhalten eines solchen Filters während der Voranschwemmphase, der eigentlichen Filtration und der Reinigung des Filters in einfacher Weise ausgewogener und kontrollierbarer zu gestalten.

Erfindungsgemäss wird dies durch einen Filter zur Anschwemmfiltration mit den Merkmalen der unabhängigen Patentansprüche erreicht.

Ein solcher Filter mit einem Filterkessel, beinhaltend einen Filterkessel mit einem Filtratraum und einem Unfiltratraum, weist in seinem unteren Bereich einen Einlaufverteiler auf. Dieser Einlaufverteiler ist im wesentlichen als dickwandiger Hohlkörper ausgebildet, in welchem Durchtrittskanäle für das zu filtrierende Medium vorgesehen sind. Dickwandig heisst hierbei insbesondere, dass das Verhältnis der Wandstärke des Einlaufverteilers zur Öffnungshöhe der Durchtrittskanäle grösser oder gleich 0.5, vorzugsweise im Bereich von 0.5 bis 7, besonders bevorzugt im Bereich von 0.5 bis 1.25 ist. Unter Öffnungshöhe wird hier und im folgenden die Höhe der Durchtrittskanäle parallel zu der Längsachse des Einlaufverteilers auf dessen Aussenseite verstanden. Unter der Längsachse wird hier und im folgenden die Achse des Einlaufverteilers in eingebautem Zustand und in Betrieb in einem Filterkessel verstanden, welche den Einlaufverteiler vertikal und mittig durchläuft. Ein bevorzugtes Material eines solchen Einlaufverteilers ist beispielsweise rostfreier Edelstahl.

Überraschenderweise hat sich gezeigt, dass durch die technisch einfache Vergrösserung des Verhältnisses von Wandstärke zu Öffnungshöhe erheblich verbesserte Strömungseigenschaften erzielbar sind. Turbulenzen, wie sie beim Austritt aus Durchtrittsöffnungen an dünnwandigen Einlaufverteilern bisher häufig beobachtet werden, können durch einen Kanalisierungseffekt der Strömung und eine gerichtete Abgabe der Flüssigkeit infolge der grösseren Wandstärke in Relation zur Öffnungshöhe entscheidend verringert werden. Hierdurch kann insbesondere in der Anschwemmphase ein homogenerer und gleichmässigerer Aufbau des Filterkuchens bewirkt werden. Zudem wird auch eine gleichmässigere Beaufschlagung der Filterelemente mit dem zu filtrierenden Gut durch relativ wirbelarme Strömungscharakteristiken beim Austritt des Mediums aus dem Einlaufverteiler in den Filterkessel bewirkt.

In einer bevorzugten Ausführungsform eines erfindungsgemässen Filters ist der Einlaufverteiler einstückig ausgebildet und die Durchtrittskanäle als eine oder mehrere übereinander angeordnete Lochreihen ausgebildet. Einlaufverteiler einer solchen Ausführungsform können verfahrenstechnisch besonders einfach hergestellt werden, beispielsweise ausgehend von einem Hohlkörper, insbesondere einem Hohlzylinder der entsprechenden Wandstärke, wobei die Durchtrittskanäle beispielsweise durch Bohrungen hinzugefügt werden können.

Gemäss einer weiteren bevorzugten Ausführungsform eines erfindungsgemässen Filters sind die Durchtrittskanäle des Einlaufverteilers orthogonal zur Längsachse des Einlaufverteilers ausgebildet. Hierdurch wird ein seitlich gerichtetes Abströmverhalten bewirkt, was sich im Zusammenwirken mit dem Kanalisierungseffekt durch die vergrösserte Wandstärke vorteilhaft auf die Verteilung des einzubringenden Mediums in dem Filter auswirkt.

Gemäss einer besonders bevorzugten Ausführungsform eines erfindungsgemässen Filters sind die Durchtrittskanäle des Einlaufverteilers in einem Winkel α versetzt zur Längsachse des Einlaufverteilers gegen die Filterelemente gerichtet ausgebildet. Im Sinne einer optimalen Verteilung des einzubringenden Mediums ist der Winkel α vorteilhafterweise der Form des Filterbodens angepasst: Im Falle flacher Klöpperböden wird der Winkel α bevorzugt stumpfer ausgeprägt sein als bei steilwandigeren konusförmigen Bodenabschlüssen.

Gemäss einer besonders vorteilhaften Ausführungsform sind die Durchtrittskanäle in verschiedenen Ebenen entlang der Längsachse und in Winkeln α, α', α" etc. zur Längsachse des Einlaufverteilers ausgebildet. Hierbei sind diese Winkel bevorzugt spitzer, je weiter die Durchtrittskanäle vom Boden des Filters entfernt sind. Durch eine derartige kontinuierliche Variation der Abstrahlrichtung entlang der Längsachse des Einlaufverteilers kann eine besonders gute Verteilung des Mediums beim Einbringen in den Filterkessel erzielt werden. Insbesondere kann durch einen Winkel der Durchtrittskanäle von > 90° vorteilhafterweise auch der Boden des Filters mit dem einströmenden Medium beaufschlagt werden, wodurch die Reinigung des Bodens insbesondere in einem dem Einlaufverteiler direkt benachbarten Bereich erheblich erleichtert wird. Dem Variationsbereich der Winkel sind im Sinne der Erfindung lediglich Grenzen durch die Geometrie des Einlaufverteilers selbst gesetzt, insbesondere bei stumpfen Winkel zwischen den Durchtrittskanälen und der Längsachse des Einlaufverteilers. An dem vom Boden des Filters abgewandten Bereich sind prinzipiell auch spitze Winkel der Durchtrittskanäle von bis zu 0°, also parallel zur Längsachse des Einlaufverteilers realisierbar.

In einer weiteren, alternativen und im Zusammenhang mit den vorstehend beschriebenen Ausführungsformen besonders vorteilhaften Ausführungsform ist der Einlaufverteiler aus Ringscheiben aufgebaut, wobei Durchtrittskanäle durch Spalten zwischen einzelnen Ringscheiben gebildet sind. Ein derartiger modularer Aufbau gewährleistet eine optimale Anpassungsmöglichkeit des Einlaufverteilers durch Variation von Form und Anzahl der Ringscheiben an die jeweils gewünschten Strömungsverhältnisse. Insbesondere kann über den modularen Aufbau des Einlaufverteilers auch die Ausprägung der Durchtrittskanäle variiert werden. Hierbei sind die Ringscheiben in einer einfachen Ausführungsform eben ausgebildet. Durch eine geeignet profilierte Ausprägung einer Ringscheibe können jedoch im Zusammenspiel mit kompatibel ausgebildeten, umliegenden Ringscheiben Durchtrittskanäle in verschiedenen Ebenen entlang der Längsachse und in verschiedenen Winkeln zur Längsachse des Einlaufverteilers gebildet werden. Durch eine geeignet profilierte Ausprägung benachbarter Ringscheiben kann zudem eine Querschnittsverjüngung der Durchtrittskanäle des Einlaufverteilers von innen nach aussen erreicht werden, wodurch ein düsenartiger Effekt erzielbar ist.

Besonders bevorzugt sind die einzelnen Ringscheiben über Abstandhalter insbesondere lösbar miteinander verbunden. Derartige Abstandhalter können entweder mit den jeweiligen Ringscheiben einteilig verbunden oder aber als separate Bauteile zwischen den Ringscheiben angeordnet sein. Eine lösbare Verbindung der einzelnen Ringscheiben kann beispielsweise über Spannmechanismen oder durch Verbindungsstifte erfolgen. Eine derartige lösbare Verbindung der Ringscheiben vereinfacht Anpassungen des Einlaufverteilers, beispielsweise nach einer Testphase, erheblich. Eine nachträgliche, dauerhafte Verbindung der Ringscheiben, beispielsweise durch Verschweissung, ist auch im Falle der ursprünglich lösbaren Verbindung selbstverständlich möglich.

Gemäss einer weiteren bevorzugten Ausgestaltung der Erfindung ist in einem vom Boden des Filters entfernten Bereich eine oder mehrere Querschnittsverjüngung(en) des Einlaufverteilers vorgesehen. Eine solche Querschnittsverjüngung kann selbstverständlich sowohl bei der geschilderten einstückigen Ausbildung des Einlaufverteilers als auch bei der aus Ringscheiben aufgebauten Ausführungsform vorgesehen sein. Durch eine derartige Querschnittsverjüngung kann eine Ausrichtung der Strömung in den zentralen Bereich des Filterkessels, wie dies beispielsweise auch durch die in diesem Bereich spitzeren Winkel der Durchtrittskanäle zur Längsachse des Einlaufverteilers erzielt werden kann, bewirkt und/oder unterstützt werden. Dies wird bei einer Querschnittsverjüngung des Einlaufverteilers durch die Verringerung des aus dem verjüngten Bereich effektiv austretenden Volumens des Mediums erreicht.

In einer besonders bevorzugten Ausführungsform ist der vom Boden des Filterkessels entfernte Abschluss des Einlaufverteilers kegelförmig ausgebildet. Eine solche Ausbildung des Abschlusses weist insbesondere entscheidende Vorteile auf, wenn der Einlaufverteiler über in spitzem Winkel zur Längsachse angeordnete Durchtrittskanäle verfügt. Beim Rückspülen eines Filters zur Anschwemmfiltration zu Reinigungszwecken wird der Filterkuchen von den Filterelementen abgelöst und die Filterhilfsmittel sowie die Filterrückstände sinken zu Boden, wo sie sodann aus dem Filter abgelassen werden. Durch die kegelförmige Ausbildung des vom Boden des Filters entfernten Abschlusses des Einlaufverteilers werden speziell in dem oberen Bereich des Einlaufverteilers - also dort, wo die Durchtrittskanäle den spitzesten Winkel zur Längsachse des Einlaufverteilers aufweisen - Strömungsverhältnisse erzeugt, welche von den äusseren Öffnungen der Durchtrittskanäle weggerichtet sind. Hierdurch kann ein übermässiger Eintritt von Filterhilfsmitteln und Filterrückständen in die Durchtrittskanäle während des Rückspülvorgangs wirksam vermieden werden. Zudem wirkt die kegelförmige Ausbildung des vom Boden des Filters entfernten Abschlusses des Einlaufverteilers auch einer Anhäufung von herabsedimentierenden Filterhilfsmitteln und Filterrückständen insbesondere beim Rückspülen des Filters entgegen, da diese auf der schrägen Ebene nicht liegenbleiben können, sondern von dem Einlaufverteiler herabrutschen.

Gemäss einer weiteren, bevorzugten Ausführungsform weisen die Ringscheiben unterschiedliche Bauhöhen auf. Hierdurch kann einerseits der Abstand zwischen einzelnen Durchtrittskanälen variiert werden, wodurch einzelne Bereiche des Einlaufverteilers selektiv an den jeweils dort angestrebten Ausstoss des einzubringenden Mediums anpassbar sind. Zudem kann aber auch der Abstand des untersten Durchtrittskanals vom Boden des Filterkessels durch die Bauhöhe der untersten Ringscheibe an die jeweiligen Betriebsbedingungen angepasst werden.

Obschon der Erfindungsgegenstand bisher im Gesamtzusammenhang als Teil eines Filters für die Anschwemmfiltration dargelegt worden ist, so ist die Erfindung nicht allein auf diesen Filter als Ganzes zu beschränken. Die geschilderten Vorteile eines Einlaufverteilers in einem Filter mit den erfindungsgemässen Merkmalen gelten selbstverständlich analog auch für den Einlaufverteiler als solchen.

Die Erfindung wird im folgenden anhand von Zeichnungen und Ausführungsbeispielen näher erläutert, ohne dass der Gegenstand der Erfindung auf diese zu beschränken wäre. Es zeigen:
- Fig. 1:: Filter für die Anschwemmfiltration, schematisch;
- Fig. 2(a):: Ausschnitt der Wandung eines einstückigen Einlaufverteilers mit horizontalen Durchlasskanälen;
- Fig. 2(b):: Ausschnitt der Wandung eines Einlaufverteilers beinhaltend Ringscheiben; Durchlasskanäle in verschiedenen Winkeln zur Längsachse des Einlaufverteilers;
- Fig. 2(c):: Einlaufverteiler mit horizontalen Durchlasskanälen im Querschnitt;
- Fig. 2(d):: Einlaufverteiler mit Durchlasskanälen in einem spitzen Winkel zur Längsachse des Einlaufverteiler;
- Fig. 3:: Filter für die Anschwemmfiltration, Ausschnitt im Bereich des Einlaufverteilers; Einlaufverteiler beinhaltend Ringscheiben;
- Fig. 4:: Filter für die Anschwemmfiltration, Ausschnitt im Bereich des Einlaufverteilers; Einlaufverteiler mit einem Spalt und
- Fig. 5:: ein alternatives Ausführungsbeispiel eines Filters für die Anschwemmfiltration mit kegelförmigem Abschluss und Querschnittsverjüngung.

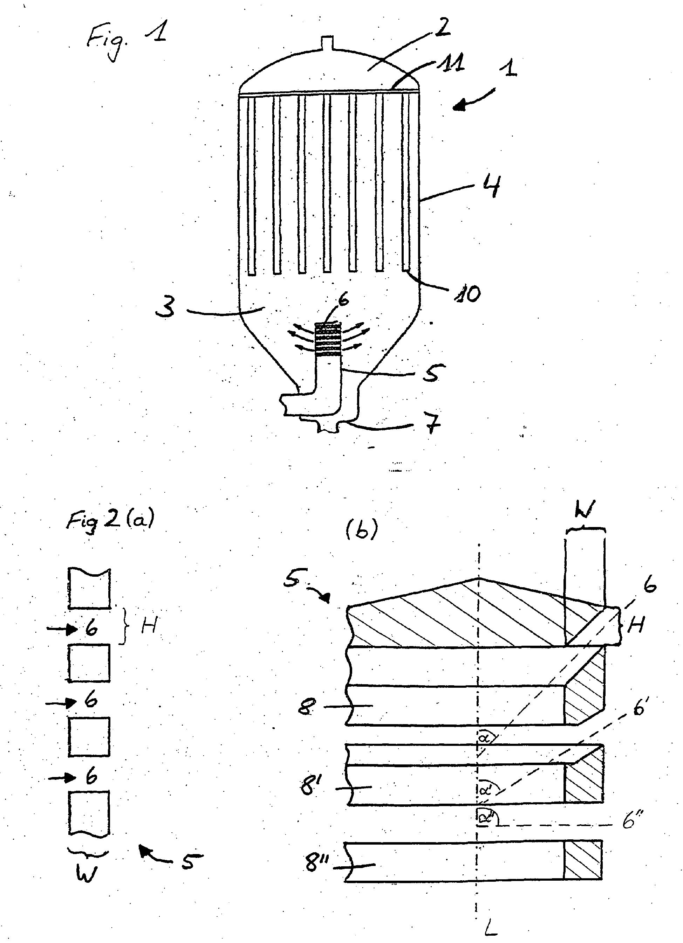

In Figur 1 ist der schematische Aufbau eines Filters 1 für die Anschwemmfiltration gezeigt. Ein solcher Filter 1 beinhaltet einen Filtratraum 2 und einen Unfiltratraum 3 in einem Filterkessel 4, wobei Filtratraum 2 und Unfiltratraum 3 in der Regel durch eine Lochplatte 11 getrennt sind. An einer solchen Lochplatte sind die Filterelemente 10 derart befestigt, dass sie in den Unfiltratraum 3 hereinragen. Die Erfindung ist jedoch nicht auf Filter 1 dieser Bauart beinhaltend eine Lochplatte 11 zu beschränken. Insbesondere können an dem Filter sowohl konisch zulaufende Bodenbereiche als auch Klöpperböden vorgesehen sein. Vor der eigentlichen Filtration werden die Filterelemente mit einem Filterhilfsmittel, beispielsweise Kieselgur, vorangeschwemmt, so dass sich auf den Filterelementen ein Filterkuchen bildet. Für gute Filtrationsergebnisse und hohe Betriebszuverlässigkeit wird stets angestrebt, einen möglichst homogenen und stabilen Aufbau des Filterkuchens zu gewährleisten. Im unteren Teil im Bereich des Bodens 7 des Filters 1 ist ein Einlaufverteiler 5 vorgesehen, welcher vergrössert dargestellt ist. Über einen solchen Einlaufverteiler werden die Filterhilfsmittel in einer Suspension sowie im weiteren Betriebsverlauf auch das zu filtrierende Gut zugeführt. Sowohl für eine gleichmässige Voranschwemmung der Filterelemente 10 mit dem Filterhilfsmittel als auch für eine gleichmässige Beaufschlagung der Filterelemente 10 mit dem zu filtrierenden Gut ist eine ausgewogene Strömungscharakteristik angestrebt, welche durch die Konstruktion des Einlaufverteilers 5 beeinflusst werden kann. In der Praxis werden häufig Einlaufverteiler 5 verwendet, welche Druchtrittskanäle 6 für das zu filtrierende Gut in Form von Löchern in der Wandung des Einlaufverteilers 5 aufweisen.

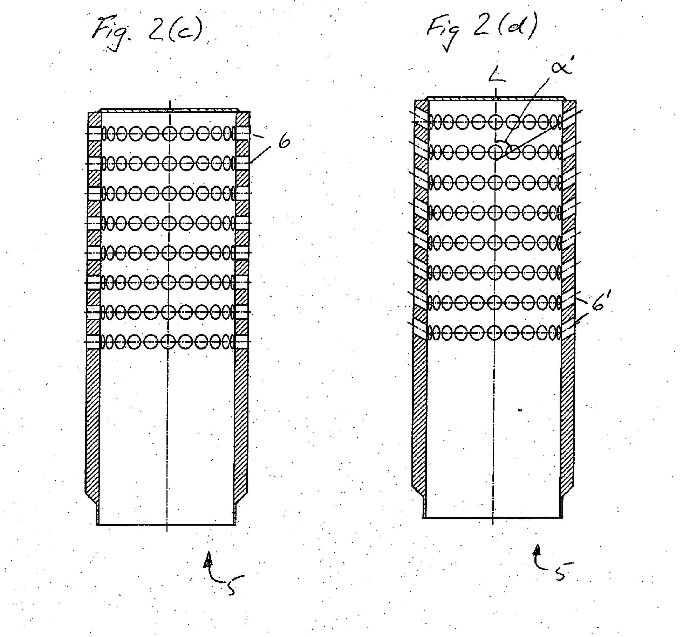

In Figur 2(a) ist ein Querschnitt einer Wandung des Einlaufverteilers 5 ausschnittweise gezeigt. In der Praxis werden bisher Einlaufverteiler 5 verwendet, welche nur eine geringe Wandstärke W aufweisen und bei denen das Verhältnis von Wandstärke W zu Öffnungshöhe H der Durchtrittskanäle 6 nur einen sehr geringen Wert, beispielsweise einen Wert von 0.15 aufweist. Bei derartigen Einlaufverteilern 5 hat sich als nachteilig herausgestellt, dass die Strömungscharakteristik beim und nach dem Austritt des Mediums aus den Durchtrittskanälen nur schwer oder gar nicht zu kontrollieren ist. Unerwünschte Verwirbelungseffekte sind indes die Regel. Es hat sich nun überraschend gezeigt, dass durch eine Erhöhung des Verhältnis von Wandstärke W zu Öffnungshöhe H der Durchtrittskanäle 6 wesentlich ausgewogenere Strömungscharakteristiken erzielbar sind. Dies ist wahrscheinlich auf einen Kanalisierungseffekt innerhalb der Durchtrittskanäle zurückzuführen, wodurch das Medium aus den Durchtrittskanälen wesentlich gerichteter austritt.

Figur 2(b) zeigt ausschnittweise einen Einlaufverteiler 5, welcher Ringscheiben 8, 8' und 8" beinhaltet, in einem Bereich der Durchtrittskanäle 6, 6' und 6". Auch bei einem Aufbau des Einlaufverteilers 5 aus Ringscheiben 8 wirkt sich das erhöhte Verhältnis von Wandstärke W zu Öffnungshöhe H positiv auf die erzielbare Strömungscharakteristik aus. Zudem kann bei einem zumindest teilweise modularen Aufbau des Einlaufverteilers 5 aus Ringscheiben 8 die Austrittsrichtung aus den einzelnen Durchtrittskanälen 6, 6' und 6" besonders einfach beeinflusst und angepasst werden. Die Ringscheiben 8 können in einer besonders einfachen Ausführung eben gestaltet sein, wie dies im Falle der Ringscheibe 8" gezeigt ist. Hierdurch ergeben sich im Zusammenwirken mit ebenen Seiten benachbarter Ringscheiben - in dem gezeigten Beispiel Ringscheibe 8' - Durchtrittskanäle 6", welche im rechten Winkel α'' zur Längsachse L des Einlaufverteilers 5 ausgebildet sind. Durch Abschrägungen im Wandungsbereich der Ringscheiben 8 und 8' können aber auch Durchtrittskanäle 6 und 6' erzielt werden, welche durch Winkel α, α' zwischen der Austrittsrichtung und der Längsachse L des Einlaufverteilers mit einem Wert ≠ 90° gekennzeichnet sind. In der Regel werden die Austrittswinkel spitzer gewählt, je weiter die Durchtrittkanäle 6, 6', 6" vom Boden des Filters 1 entfernt sind. Hierdurch kann prinzipiell für jeden Durchtrittskanal 6 einzeln ein gewünschter Austrittswinkel bestimmt und verwirklicht werden, was eine hohen Variabilität und Anpassungsmöglichkeit an die speziellen Gegebenheiten des einzelnen Filters 1 ermöglicht. Selbstverständlich ist in Analogie eine Variation des Winkels α zwischen der Austrittsrichtung und der Längsachse L des Einlaufverteilers mit Werten ≠ 90° auch bei einer Anordnung gemäss Figur 2(a) möglich.

Figur 2(c) zeigt einen Einlaufverteiler 5 mit horizontalen Durchtrittskanälen 6 im Querschnitt. In dem gezeigten Ausführungsbeispiel sind die Durchtrittskanäle 6 durch einzelne Löcher gebildet.

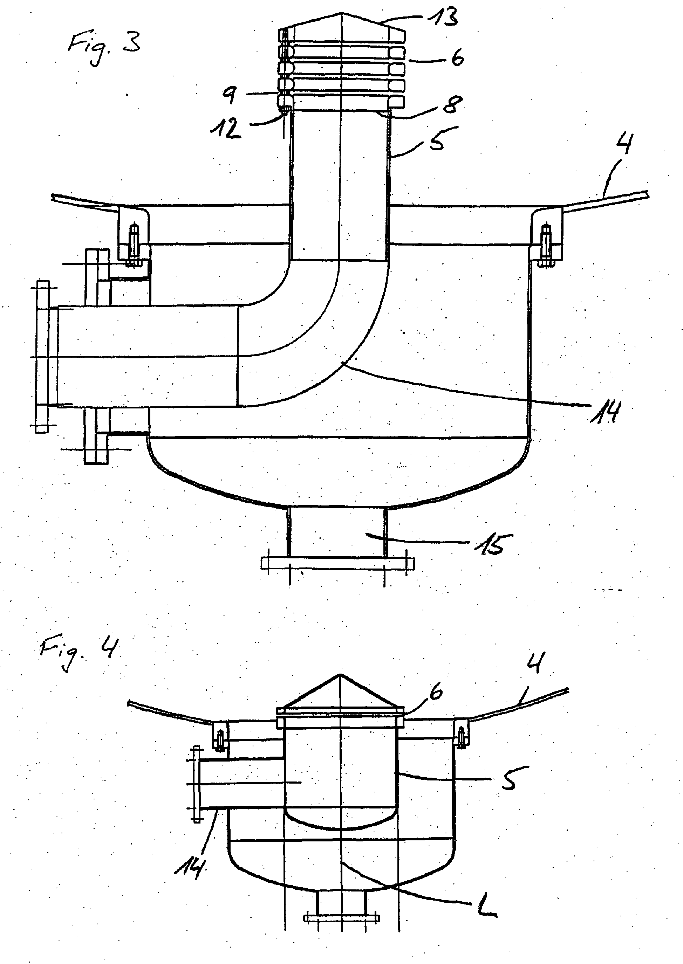

Figur 2(d) zeigt als weiteres Ausführungsbeispiel einen Einlaufverteiler 5 mit lochförmigen Durchtrittskanälen 6', wobei zwischen der Austrittsrichtung und der Längsachse L des Einlaufverteilers 5 ein spitzer Winkel α' gebildet ist. In dem gezeigten Ausführungsbeispiel ist der Winkel α' bei allen Durchtrittskanälen 6' gleich gross. Selbstverständlich ist es erfindungsgemäss ebenfalls möglich, den stets gleich grossen Winkel α' durch Ringspalte (vergl. Figur 3) zu bilden.

Figur 3 zeigt ein Einbaubeispiel eines Einlaufverteilers 5, welcher Ringscheiben mit dem einleitend beschriebenen, vergrösserten Verhältnis von Wandstärke W zu Öffnungshöhe H der Durchtrittskanäle 6 beinhaltet (vergl. Figuren 2(a) und 2(b)), in einen Filter 1. Der Einlaufverteiler 5 wird über einen Zulauf 14 mit dem in den Filterkessel 4 einzubringenden Medium gespeist. Die Ringscheiben 8 des Einlaufverteilers 5 sind derart miteinander verbunden, dass Durchtrittskanäle 6 zwischen den einzelnen Ringscheiben 8 verbleiben. Dies kann beispielsweise bewirkt werden mit Verbindungsstiften 12, welche durch die einzelnen Ringscheiben 8 in deren äusserem Randbereich hindurchgeführt werden und diese verspannen. Der gewünschte Durchtrittskanal 6 zwischen einzelnen Ringscheiben 8 wird beispielsweise durch Abstandhalter 9 zwischen einzelnen Ringscheiben 8 erzielt. Derartige Abstandhalter 9 können einteilig mit einer Ringscheibe 8 verbunden sein. Es kann sich hierbei jedoch auch um ein separates Bauteil handeln. Durch Variation der Bauhöhen der Abstandhalter 9 können auch bei einzelnen Durchtrittskanälen 6 unterschiedliche Öffnungshöhen H erzielt werden. Vorzugsweise wird der Verbindungsstift 12 sowohl durch den äusseren Bereich der Ringscheibe 8 als auch durch den Abstandhalter 9 hindurchgeführt, so dass alle Bauteile effektiv miteinander verspannt werden können, beispielsweise durch Verschraubung. In dem gezeigten Ausführungsbeispiel sind ebene Ringscheiben 8 verwendet worden; alle Ausführungen gelten selbstverständlich analog auch für Ringscheiben 8, welche Abschrägungen in ihrem äusseren Randbereich aufweisen (vergl. Figur 2(b)). Der kegelförmige Abschluss 13 des Einlaufverteilers 5 ist insbesondere dann vorteilhaft, wenn der Einlaufverteiler 5 Durchtrittskanäle 6 mit einem spitzen Winkel α zur Längsachse L aufweist (vergl. Figur 2). Durch den kegelförmigen Abschluss 13 des Einlaufverteilers 5 werden beim Ablassen von Medien durch den Ablauf 15, beispielsweise beim Rückspülen eines Filters 1, Strömungsverhältnisse im Bereich des Einlaufverteilers 5 erzeugt, welche von diesem weggerichtet sind. Hierdurch kann ein übermässiger Eintritt beispielsweise von sedimentierendem Filterhilfsmittel in die Durchtrittskanäle 6 wirksam vermieden werden. Zudem wird eine Ablagerung von sedimentierenden Verunreinigungen auf dem kegelförmigen Abschluss 13 durch dessen Neigung verhindert.

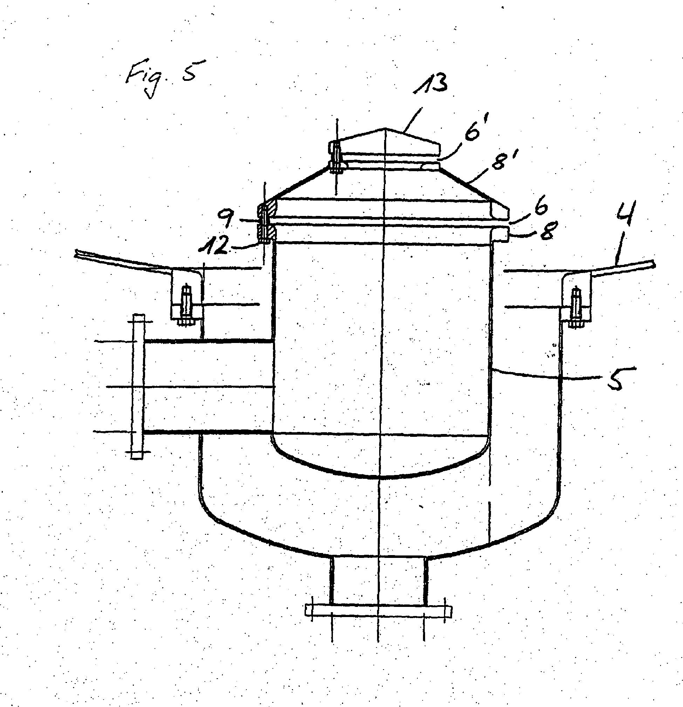

Figur 4 zeigt eine besonders einfache Ausführungsform eines Einlaufverteilers 5 mit nur einem Durchtrittskanal 6 in einem Filterkessel 4. Der Einlaufverteiler 5 wird über einen Zulauf 14 mit dem in den Filterkessel 4 einzubringenden Medium gespeist. Auch ein einziger Durchtrittskanal 6 eines Einlaufveteilers 5 kann erfindungsgemäss sowohl rechtwinkelig zur Längsachse L des Einlaufverteilers 5, aber auch in einem Winkel α von ≠ 90° ausgebildet sein. In der Praxis wird der Winkel α zwischen Durchtrittskanal 6 und Längsachse L des Einlaufverteilers 5 an die Form des Filterkessels in seinem im Betriebszustand unteren Bereich angepasst: bei flachen Klöpperböden wird ein stumpfer Winkel α gewählt werden, wohingegen bei steilen konusförmigen Ausbildungen des Filterkessels 4 ein spitzerer Winkel α gewählt werden kann.

Figur 5 zeigt einen Einlaufverteiler 5, welcher Ringscheiben 8 und 8' und einen kegelförmigen Abschluss 13 beinhaltet, in einem Filterkessel 4. Die einzelnen Ringscheiben 8 und 8' und der kegelförmige Abschluss 13 sind über Abstandhalter 9 und Verbindungsstifte 12 untereinander und mit dem unteren Teil des Einlaufverteilers 5 verbunden. Zwischen dem unteren Teil des Einlaufverteilers und der Ringscheibe 8 wird ein Durchlasskanal 6 gebildet, zwischen Ringscheibe 8' und dem kegelförmigen Abschluss 13 wird ein weiterer Durchlasskanal 6' gebildet. Durch die Ringscheibe 8' wird eine Querschnittsverjüngung des Einlaufverteilers 5 erzeugt. Hierdurch wird bei gleicher Öffnungshöhe H des Durchtrittskanals 6' die wirksame Austrittsfläche verringert im Vergleich zum Durchtrittskanal 6. Der Hauptstrom des durch den Einlaufverteiler 5 einzubringenden Mediums wird also in dem gezeigten Beispiel über den Durchtrittskanal 6 geleitet und nur ein geringerer Teilstrom über den Durchtrittskanal 6' in den Filterkessel eingebracht. Hierdurch ergeben sich nochmals verbesserte Strömungscharakteristiken im Sinne einer ausgewogenen und homogenen Verteilung des einzubringenden Mediums in den Filterkessel 4. Selbstverständlich ist es möglich, mehrere übereinander angeordnete, jeweils zueinander querschnittsverjüngte Durchtrittskanäle 6, 6' vorzusehen.

## Patentansprüche

1. Filter (1) für die Anschwemmfiltration, beinhaltend einen Filterkessel (4) mit einem Filtratraum (2) und einem Unfiltratraum (3), welcher in seinem unteren Bereich einen Einlaufverteiler (5) aufweist, wobei der Einlaufverteiler (5) im wesentlichen als Hohlkörper ausgebildet ist, in welchem Durchtrittskanäle (6) für das zu filtrierende Medium vorgesehen sind, wobei das Verhältnis der Wandstärke (W) des Einlaufverteilers (5) zur Öffnungshöhe (H) der Durchtrittskanäle (6) grösser ist als 0.5, vorzugsweise im Bereich von 0.5 bis 7, besonders bevorzugt im Bereich von 0.5 bis 1.25, und **dadurch gekennzeichnet, dass**
die Durchtrittskanäle (6) als mehrere übereinander angeordnete Lochreihen ausgebildet sind.

2. Filter (1) für die Anschwemmfiltration nach Anspruch 1, **dadurch gekennzeichnet, dass** der Einlaufverteiler (5) einstückig ausgebildet ist.

3. Filter (1) für die Anschwemmfiltration nach Anspruch 2, **dadurch gekennzeichnet, dass** in einem vom Boden (7) des Filters entfernten Bereich eine Querschnittsverjüngung des Einlaufverteilers (5) vorgesehen ist.

4. Filter (1) für die Anschwemmfiltration, beinhaltend einen Filterkessel (4) mit einem Filtratraum (2) und einem Unfiltratraum (3), welcher in seinem unteren Bereich einen Einlaufverteiler (5) aufweist, wobei der Einlaufverteiler (5) im wesentlichen als Hohlkörper ausgebildet ist, in welchem Durchtrittskanäle (6) für das zu filtrierende Medium vorgesehen sind, wobei das Verhältnis der Dicke in Radialrichtung (W) des Einlaufverteilers (5) zur Öffnungshöhe (H) der Durchtrittskanäle (6) grösser ist als 0.5, vorzugsweise im Bereich von 0.5 bis 7, besonders bevorzugt im Bereich von 0.5 bis 1.25, und **dadurch gekennzeichnet, dass**
der Einlaufverteiler (5) Ringscheiben (8) von im Wesentlichen gleichen Aussendurchmesser aufweist, wobei Durchtrittskanäle (6) durch Spalten (S) zwischen einzelnen Ringscheiben (8) gebildet sind und die Durchtrittskanäle (6) jeweils nach aussen eine konstante oder sich verringernde Öffnungshöhe (H) aufweisen.

5. Filter (1) für die Anschwemmfiltration nach Anspruch 1 oder 4, **dadurch gekennzeichnet, dass** die Durchtrittskanäle (6) orthogonal zur Längsachse (L) des Einlaufverteilers (5) ausgebildet sind.

6. Filter (1) für die Anschwemmfiltration nach Anspruch 1 oder 4, **dadurch gekennzeichnet, dass** die Durchtrittskanäle (6) in einem spitzen Winkel α zur Längsachse (L) des Einlaufverteilers (5) ausgebildet sind.

7. Filter (1) für die Anschwemmfiltration nach Anspruch 6, **dadurch gekennzeichnet, dass** die Durchtrittskanäle (6) in verschiedenen Ebenen (E) entlang der Längsachse (L) angeordnet und in Winkeln α, α', α" etc. zur Längsachse (L) des Einlaufverteilers (5) ausgebildet sind, wobei diese Winkel spitzer sind, je weiter die Durchtrittskanäle (6) vom Boden (7) des Filters (1) entfernt sind.

8. Filter (1) für die Anschwemmfiltration nach Anspruch 4, **dadurch gekennzeichnet, dass** die einzelnen Ringscheiben (8) über Abstandhalter (9) insbesondere lösbar miteinander verbunden sind.

9. Filter (1) für die Anschwemmfiltration nach einem der Ansprüche 4 oder 8, **dadurch gekennzeichnet, dass** eine oder mehrere Ringscheiben (8) auf ihrer Ober- und/oder Unterseite eine Abschrägung aufweisen.

10. Filter (1) nach einem der Ansprüche 4, 8 oder 9 , **dadurch gekennzeichnet, dass** die Ringscheiben (8) unterschiedliche Bauhöhen aufweisen.

11. Filter (1) für die Anschwemmfiltration nach einem der vorgenannten Ansprüche, **dadurch gekennzeichnet, dass** der vom Boden (7) entfernte Abschluss des Einlaufverteilers (5) kegelförmig ausgebildet ist

12. Einlaufverteiler (5), insbesondere für einen Filter (1) nach einem der vorgenannten Ansprüche, wobei der Einlaufverteiler er im wesentlichen als Hohlkörper ausgebildet ist, in welchem Durchtrittskanäle (6) für das zu filtrierende Medium vorgesehen sind, wobei das Verhältnis der Wandstärke (W) des Einlaufverteilers (5) zur Öffnungshöhe (H) der Durchtrittskanäle (6) grösser ist als 0.5, vorzugsweise im Bereich von 0.75 bis 1.25 ist, **dadurch gekennzeichnet, dass** die Durchtrittskanäle (6) als mehrere übereinander angeordnete Lochreihen ausgebildet sind.

13. Einlaufverteiler (5), insbesondere für einen Filter (1) nach einem der vorgenannten Ansprüche, wobei der Einlaufverteiler er im wesentlichen als Hohlkörper ausgebildet ist, in welchem Durchtrittskanäle (6) für das zu filtrierende Medium vorgesehen sind, wobei das Verhältnis der Dicke in Radialrichtung (W) des Einlaufverteilers (5) zur Öffnungshöhe (H) der Durchtrittskanäle (6) grösser ist als 0.5, vorzugsweise im Bereich von 0.75 bis 1.25 ist, **dadurch gekennzeichnet, dass** der Einlaufverteiler (5) Ringscheiben (8) von im Wesentlichen gleichen Aussendurchmesser aufweist, wobei Durchtrittskanäle (6) durch Spalten (S) zwischen einzelnen Ringscheiben (8) gebildet sind und die Durchtrittskanäle (6) jeweils nach aussen eine konstante oder sich verringernde Öffnungshöhe (H) aufweisen.

## Claims

1. A filter (1) for precoat filtration including a filter vessel (4), having a filtrate chamber (2) and a non-filtrate chamber (3), which in its lower region has an intake distributor (5), wherein the intake distributor (5) is substantially in the form of a hollow body in which there are provided through passages (6) for the medium to be filtered, wherein the ratio of the wall thickness (W) of the intake distributor (5) to the opening height (H) of the through passages (6) is greater than 0.5, preferably in the range of 0.5 to 7, particularly preferably in the range of 0.5 to 1.25, and **characterised in that**
the through passages (6) are in the form of a plurality of rows of holes arranged in superposed relationship.

2. A filter (1) for precoat filtration according to claim 1 **characterised in that** the intake distributor (5) is in one piece.

3. A filter (1) for precoat filtration according to claim 2 **characterised in that** provided in a region remote from the bottom (7) of the filter is a reduction in cross-section of the intake distributor (5).

4. A filter (1) for precoat filtration including a filter vessel (4), having a filtrate chamber (2) and a non-filtrate chamber (3), which in its lower region has an intake distributor (5), wherein the intake distributor (5) is substantially in the form of a hollow body in which there are provided through passages (6) for the medium to be filtered, wherein the ratio of the thickness in the radial direction (W) of the intake distributor (5) to the opening height (H) of the through passages (6) is greater than 0.5, preferably in the range of 0.5 to 7, particularly preferably in the range of 0.5 to 1.25, and **characterised in that** the intake distributor (5) has annular plates (8) of substantially equal outside diameter, wherein through passages (6) are formed by gaps (S) between individual annular plates (8) and the through passages (6) are each outwardly of a constant or decreasing opening height (H).

5. A filter (1) for precoat filtration according to claim 1 or claim 4 **characterised in that** the through passages (6) are formed in orthogonal relationship with the longitudinal axis (L) of the intake distributor (5).

6. A filter (1) for precoat filtration according to claim 1 or claim 4 **characterised in that** the through passages (6) are formed at an acute angle α relative to the longitudinal axis (L) of the intake distributor (5).

7. A filter (1) for precoat filtration according to claim 6 **characterised in that** the through passages (6) are arranged in different planes (E) along the longitudinal axis (7) and are formed at angles α, α', α" etc relative to the longitudinal axis (L) of the intake distributor (5), wherein said angles are more acute, the further away that the through passages (6) are from the bottom (7) of the filter (1).

8. A filter (1) for precoat filtration according to claim 4 **characterised in that** the individual annular plates (8) are in particular releasably connected together by way of spacers (9).

9. A filter (1) for precoat filtration according to one of claims 4 or 8 **characterised in that** one or more annular plates (8) have a bevel on their top side and/or underside.

10. A filter (1) according to one of claims 4, 8 or 9 **characterised in that** the annular plates (8) are of different structural heights.

11. A filter (1) for precoat filtration according to one of the preceding claims **characterised in that** the closure of the intake distributor (5), which is remote from the bottom (7), is of a conical configuration.

12. An intake distributor (5), in particular for a filter (1) according to one of the aforesaid claims, wherein the intake distributor is substantially in the form of a hollow body in which there are provided through passages (6) for the medium to be filtered, wherein the ratio of the wall thickness (W) of the intake distributor (5) to the opening height (H) of the through passages (6) is greater than 0.5, preferably in the range of 0.75 to 1.25, **characterised in that** the through passages (6) are in the form of a plurality of rows of holes arranged in superposed relationship.

13. An intake distributor (5), in particular for a filter (1) according to one of the aforesaid claims, wherein the intake distributor is substantially in the form of a hollow body in which there are provided through passages (6) for the medium to be filtered, wherein the ratio of the thickness in the radial direction (W) of the intake distributor (5) to the opening height (H) of the through passages (6) is greater than 0.5, preferably in the range of 0.75 to 1.25, **characterised in that** the intake distributor (5) has annular plates (8) of substantially identical outside diameter, wherein through passages (6) are formed by gaps (S) between individual annular plates (8) and the through passages (6) are each outwardly of a constant or decreasing opening height (H).

## Revendications

1. Filtre (1) pour la filtration par couches, contenant un récipient filtrant (4) avec un espace pour filtrat (2) et un espace pour produit non filtré (3) qui présente dans sa zone inférieure un distributeur d'entrée (5), le distributeur d'entrée (5) étant conçu essentiellement comme un corps creux dans lequel sont prévus des conduits de passage (6) pour le produit à filtrer, et le rapport de l'épaisseur de paroi (W) du distributeur d'entrée (5) sur la hauteur d'ouverture (H) des conduits de passage (6) étant supérieur à 0,5 et situé de préférence dans la plage de 0,5 à 7, plus spécialement dans la plage de 0,5 à 1,25,
**caractérisé en ce que** les conduits de passage (6) sont conçus sous la forme de plusieurs rangées de trous superposées.

2. Filtre (1) pour la filtration par couches selon la revendication 1, **caractérisé en ce que** le distributeur d'entrée (5) est conçu d'une seule pièce.

3. Filtre (1) pour la filtration par couches selon la revendication 2, **caractérisé en ce qu'**il est prévu dans une zone éloignée du fond (7) du filtre un rétrécissement de la section transversale du distributeur d'entrée (5).

4. Filtre (1) pour la filtration par couches, contenant un récipient filtrant (4) avec un espace pour filtrat (2) et un espace pour produit non filtré (3) qui présente dans sa zone inférieure un distributeur d'entrée (5), le distributeur d'entrée (5) étant conçu essentiellement comme un corps creux dans lequel sont prévus des conduits de passage (6) pour le produit à filtrer, et le rapport de l'épaisseur, dans le sens radial (W) du distributeur (5), sur la hauteur d'ouverture (H) des conduits de passage (6) étant supérieur à 0,5 et situé de préférence dans la plage de 0,5 à 7, plus spécialement dans la plage de 0,5 à 1,25,
**caractérisé en ce que** le distributeur d'entrée (5) présente des disques (8) de diamètres extérieurs sensiblement égaux, les conduits de passage (6) étant définis par des interstices (S) entre les disques individuels (8) et présentant chacun, vers l'extérieur, une hauteur d'ouverture (H) constante ou qui va en diminuant.

5. Filtre (1) pour la filtration par couches selon la revendication 1 ou 4, **caractérisé en ce que** les conduits de passage (6) sont orthogonaux par rapport à l'axe longitudinal (L) du distributeur d'entrée (5).

6. Filtre (1) pour la filtration par couches selon la revendication 1 ou 4, **caractérisé en ce que** les conduits de passage (6) sont formés suivant un angle aigu α par rapport à l'axe longitudinal (L) du distributeur d'entrée (5).

7. Filtre (1) pour la filtration par couches selon la revendication 6, **caractérisé en ce que** les conduits de passage (6) sont disposés dans différents plans (E) le long de l'axe longitudinal (L) et sont formés suivant des angles α, α', α", etc. par rapport à l'axe longitudinal (L) du distributeur d'entrée (5), ces angles étant plus aigus à mesure que les conduits de passage (6) sont plus éloignés du fond (7) du filtre (1).

8. Filtre (1) pour la filtration par couches selon la revendication 4, **caractérisé en ce que** les disques individuels (8) sont reliés entre eux, notamment de manière amovible, par l'intermédiaire d'écarteurs (9).

9. Filtre (1) pour la filtration par couches selon la revendication 4 ou 8, **caractérisé en ce qu'**un ou plusieurs disques (8) présentent une partie inclinée sur leur côté supérieur et/ou inférieur.

10. Filtre (1) selon la revendication 4, 8 ou 9, **caractérisé en ce que** les disques (8) présentent différentes hauteurs de construction.

11. Filtre (1) pour la filtration par couches selon l'une des revendications précédentes, **caractérisé en ce que** l'extrémité du distributeur d'entrée (5) qui est éloignée du fond (7) est conique.

12. Distributeur d'entrée (5), en particulier pour un filtre (1) selon l'une des revendications précédentes, étant précisé qu'il est conçu essentiellement comme un corps creux dans lequel sont prévus des conduits de passage (6) pour le produit à filtrer, et que le rapport de l'épaisseur de paroi (W) du distributeur d'entrée (5) sur la hauteur d'ouverture (H) des conduits de passage (6) est supérieur à 0,5 et situé de préférence dans la plage de 0,75 à 1,25,
**caractérisé en ce que** les conduits de passage (6) sont conçus sous la forme de plusieurs rangées de trous superposées.

13. Distributeur d'entrée (5), en particulier pour un filtre (1) selon l'une des revendications précédentes, étant précisé qu'il est conçu essentiellement comme un corps creux dans lequel sont prévus des conduits de passage (6) pour le produit à filtrer, et que le rapport de l'épaisseur, dans le sens radial (W) du distributeur (5), sur la hauteur d'ouverture (H) des conduits de passage (6) est supérieur à 0,5 et situé de préférence dans la plage de 0,75 à 1,25,
**caractérisé en ce que** le distributeur d'entrée (5) présente des disques (8) de diamètres extérieurs sensiblement égaux, les conduits de passage (6) étant définis par des interstices (S) entre les disques individuels (8) et présentant chacun, vers l'extérieur, une hauteur d'ouverture (H) constante ou qui va en diminuant.
